# EUROPEAN PATENT SPECIFICATION

(11) **EP 0 352 733 B1**
(45) Date of publication and mention of the grant of the patent: **17.08.1994**
(21) Application number: 89113692.1
(22) Date of filing: 25.07.1989
(51) Int. Cl.: B62M 25/04

(54) **Change-speed lever apparatus for use in bicycle**
Gangschaltungs-Betätigungshebel für Fahrrad
Levier de commande de changement de vitesse pour une bicyclette

(30) Priority: 29.07.1988 JP 190952/88
(43) Date of publication of application: 31.01.1990
(73) Proprietor: SHIMANO INC., Osaka (JP)
(72) Inventor: Nagano, Masashi, Izumi-shi Osaka (JP)
(74) Representative: Säger, Manfred, Dipl.-Ing.

(56) References cited:
- EP-A- 0 067 692
- FR-A- 2 480 223
- FR-A- 2 523 066
- FR-A- 2 594 404
- GB-A- 2 081 426
- GB-A- 2 169 065

## Description

The present invention relates to a change-speed lever apparatus for use in a bicycle, according to the preamble of the main claim.

A change-speed lever apparatus according to the preamble of the main claim is disclosed in GB-A-2 169 065. In this apparatus the position maintaining mechanism is released by actuating a push bottom while a control lever is used to wind a cable to change a speed change position.

With the above-described conventional lever apparatus, however, if the apparatus is attached adjacent the grip portion of the steering handle bar of the biycle and for providing a rather large number of speeds such as five or six steps, the change-speed lever apparatus for actuating necessarily needs a thumb and an index finger of the bicycle rider, respectively. This means that the rider's finger, which contributes importantly to the handle gripping force, has to move away from the grip portion of the handle bar in order to effect a change-speed operation. Needless to say, such insufficient grip condition should be avoided with view to the safety of the bicycle rider.

In addition, if both the thumb and the index finger have to be available for a change-speed operation, the control lever must be attached to the upside portion of the steering handle, which means that the thumb when used for the change-speed operation must be clumsily moved from its downside gripping position up to the upside position of the lever. Thus, in this case, the gripping force of the thumb, which is also important for the rider's handle gripping, becomes insecure.

In view of the above-described state of the art, the primary object of the present invention is to provide an improved change-speed lever apparatus for use in a bicycle, which always permits the rider to actuate the position-maintaining mechanism and release mechanism with one control lever.

In order to accomplish the above-noted object, in a change-speed lever apparatus of the invention for use in a bicycle, the release mechanism R is activated by operating said control lever 40 in a second plane different from a first plane defined by the rotation of said control lever for effecting the change-speed operation.

According to the above-defined construction, with a forward operation on the control lever the winding member is pivoted to wind the change-speed cable and the winding member has this cable-wound position thereof maintained by the engagement between the engaging member and the engaging portion in the position-maintaining mechanism. Then, if this engagement between the engaging member and the engaging portion is released with an operation on the release mechanism, the winding member, which is urged in the cable-rewinding direction, may be pivoted in this cable-unwinding direction.

The above cable-unwniding operation can be effected merely by releasing the engagement between the engaging member and the engaging portion and thus requires only a very short operation stroke. And, such short operation stroke permits the rider to conveniently use any finger for the release operation without deterioration in the handle gripping condition in the change-speed operation.

Furthermore, since the engagement between the engaging member and the engaging portion is effected stepwise to provide the rider with a click operation feel, the rider may reliably recognize the present speed step position.

According to the present invention the release mechanism is activated by operating the control lever in a second plane different from a first plane defined by the rotation of said control lever for effecting the change-speed operation.

As the control lever is adapted so as to act also as release lever, the operations of the winding member in the two opposite directions may be carried out by a single finger, whereby the controllability of the bicycle change-speed lever apparatus of the invention may be further improved.

Further and other objects, features and effects of the invention will become apparent from the following more detailed description of the embodiments of the invention with reference to the accompanying drawings.

### BRIEF DESCRIPTION OF THE DRAWINGS

Figs. 1 through 10 illustrate preferred embodiments of the present invention; in which,
Fig. 1 is a partially cutaway cross section showing a change-speed lever apparatus according to one preferred embodiment of the invention,
Fig. 2 is a plane view of the same,
Fig. 3 is a partially cutaway cross section taken along a line III - III of Fig. 1,
Fig. 4 is a partially cutaway cross section taken along a line IV - IV of Fig. 1,
Figs. 5 and 6 are views illustrating operational conditions,
Fig. 7 is a view showing the apparatus of Fig. 1 attached to a bicycle, and
Figs. 8 through 10 illustrate alternate embodiments of the invention, respectively.

### DESCRIPTION OF THE PREFERRED EMBODIMENTS

Preferred embodiments of the present invention will be particularly described hereinafter with referece to the accompanying drawings.

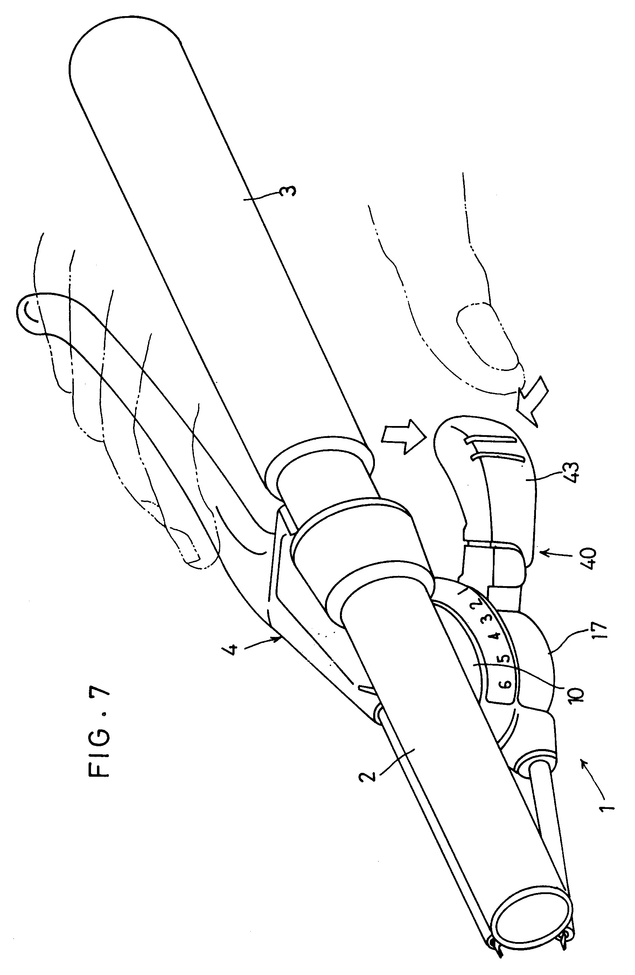

A bicycle change-speed lever apparatus 1 to which the invention relates is adapted mainly for use with a five to six step speed rear derailleur. As shown in Fig. 7, the change-speed lever apparatus 1 is attached to the vicinity of a grip portion 3 of a steering handle bar 2, such that its control lever 40 may be operated by a thumb of a rider's hand as gripping the grip portion 3. In operation of this lever apparatus 1, as will be described more particularly later, with a forward operation on a control portion 43 of the lever 40 from its home position in the bending direction of the thumb on the horizontal plane, a winding member 20 to be described later is pivoted in a cable-winding direction (to be briefly referred to as the winding direction hereinafter) so as to wind a change-speed cable operatively connected with the apparatus 1 by a predetermined amount. Reversely, with a vertical release operation on the control portion 43, the winding member 20 is pivoted in a cable-unwinding direction (to be briefly referred to as the unwinding direction hereinafter) to unwind the cable by the predetermined amount.

Though unillustrated, the rear derailleur is operable to effect a change speed through a movement of a chain guide by causing the chain guide to pivot relative to a fixed member on the bicycle body side via a quadrople link mechanism. In this rear derailleur, the chain guide is normally positioned at a high-speed sprocket by means of an urging force of a derailleur spring attached to the link mechanism. Then, if the quadrople link mechanism is pulled via the cable against the urging force of the spring, the derailleur effects a change speed to a lower speed position.

A fixed member 10 of the change-speed lever apparatus 1 is fixedly secured to a base 12, which is fixed to the handle bar 2, by tightening a first shaft 11 acting as a cylindrical support shaft via a tightening screw 13. The base 12, as illustrated in Fig. 7, is formed integrally and continuously with a bracket of a brake lever device 4 fixed to the handle bar 2.

Between the first shaft 11 and the base 12, there are provided a plurality of engaging projections and engaging recesses corresponding thereto, such that through a selective engagement between the same the first shaft 11 has its peripheral position variable relative to the base 12. At a leading end and outer peripheral surface of the first shaft 11, there are formed a plurality of concave grooves 14 and a threaded groove. Then, with a screw-engagement of a nut 15 into this threaded groove, the winding member 20 and a control lever element 41 are detachably supported to the first shaft 11. Further, at the concave groove 14 of the first shaft 11, there is provided a spring-receiver plate 16 for receiving, between the plate 16 and the winding member 20, a unwinding spring 21 for urging the winding member 20 in the unwinding direction. Reference numeral 17 denotes a bowl-shaped cover for covering the base end portions of the winding member 20 and the control lever 40.

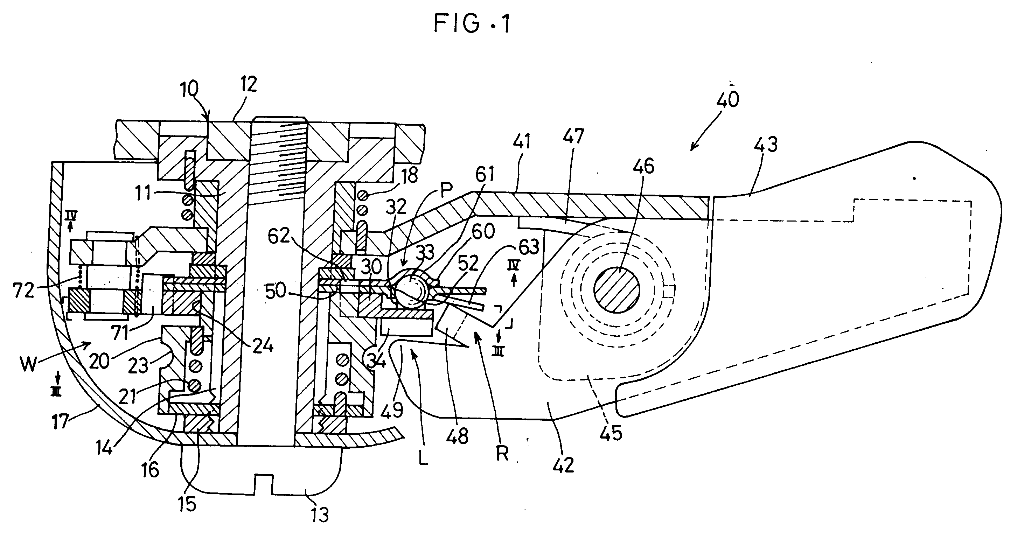

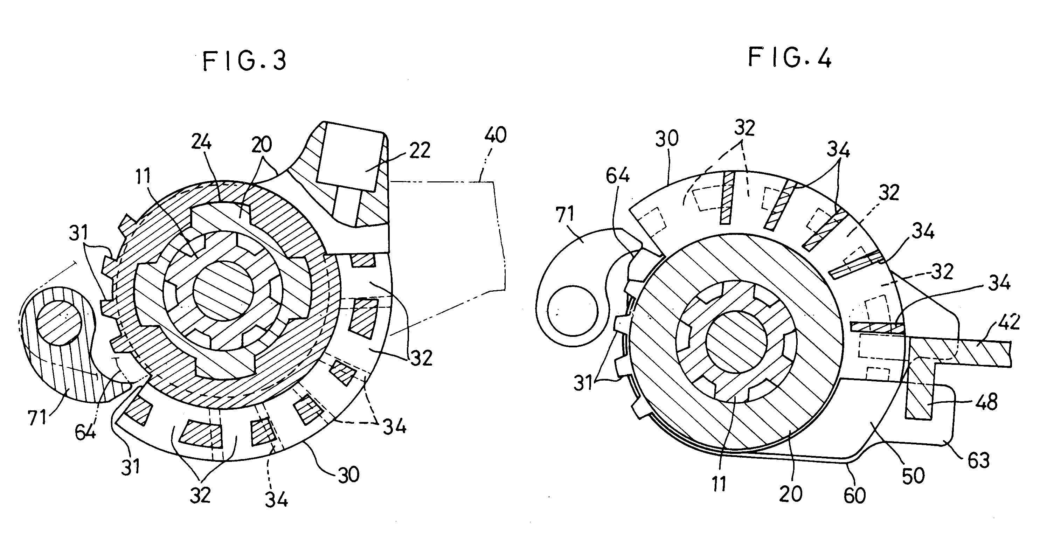

As shown in Figs. 1 and 3, the winding member 20 is formed as a cylindrical structure having a cable-stopper portion 22 at one lateral side thereof and defines at an intermediate position in its outer periphery a cable-guide groove 23 formed continuous with the cable-stopper portion 22 and along the periphery of the winding member 20. Further, the winding member 20 includes, at one end thereof along the first shaft 11, an engaging portion 24 having a plurality of engaging projections disposed with a predetermined peripheral interdistance therebetween. Then, as this engaging portion 24 comes into engagement with one of the engaging hole of a disc-shaped positioning member 30 to be described later, the winding member 20 and this positioning member 30 come into unrotatable connection with each other.

The control lever 40 includes the control lever element 41 formed of a metal plate, a release lever element 42 formed also of a metal plate and a control portion 43 formed of a resin material and at the leading end of the release lever element 42. The control lever element 41 defines at an intermediate position thereof a first shaft hole 44 for engaging with the first shaft 11. Further, the lever element 41 forms, at one end thereof, a pair of connecting pieces 45 extending along the axial direction of the first shaft hole 44. Then, the release lever element 42 is pivotably supported to the connecting pieces 45 by a predetermined range via a second shaft 46 disposed normal to the axis of the first shaft hole 44. That is to say, as the first shaft 11 and the second shaft 46 are disposed normal to each other, with a horizontal pivotal operation on the control lever 40, the entire control lever 40 pivots only about the first shaft 11; whereas, with a vertical pivotal operation on the control lever 40, the release lever element 42 alone pivots about the second shaft 46.

Between the release lever element 42 and the control lever element 41, there is interposed a release lever spring 47 for urging the release lever element 42 in its return direction, such that the respective lever elements 41 and 42 are normally maintained at horizontal postures. Further, the release lever element 42 has its upper end face contacting a lower end face of the control lever element 41 thereby to set a home position of the release lever element 42.

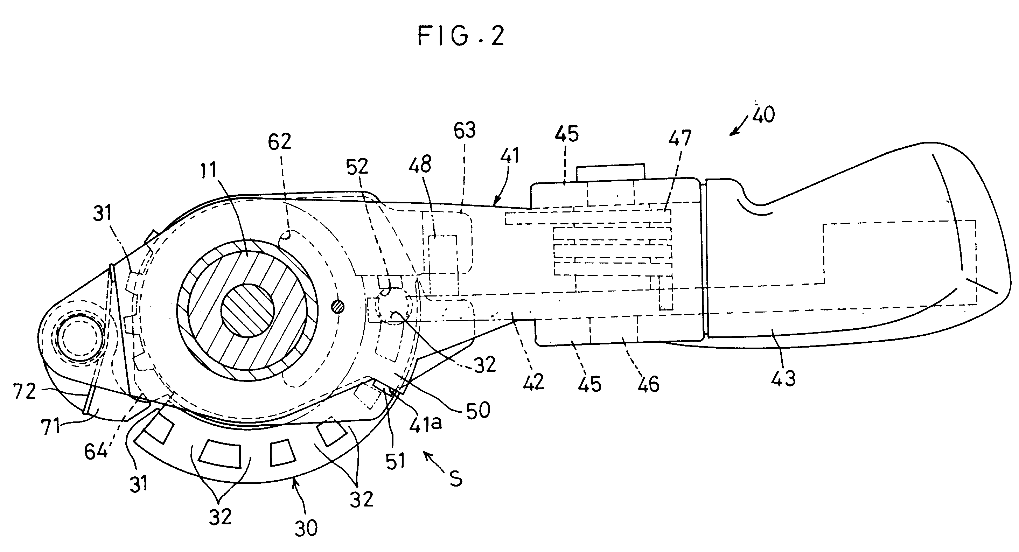

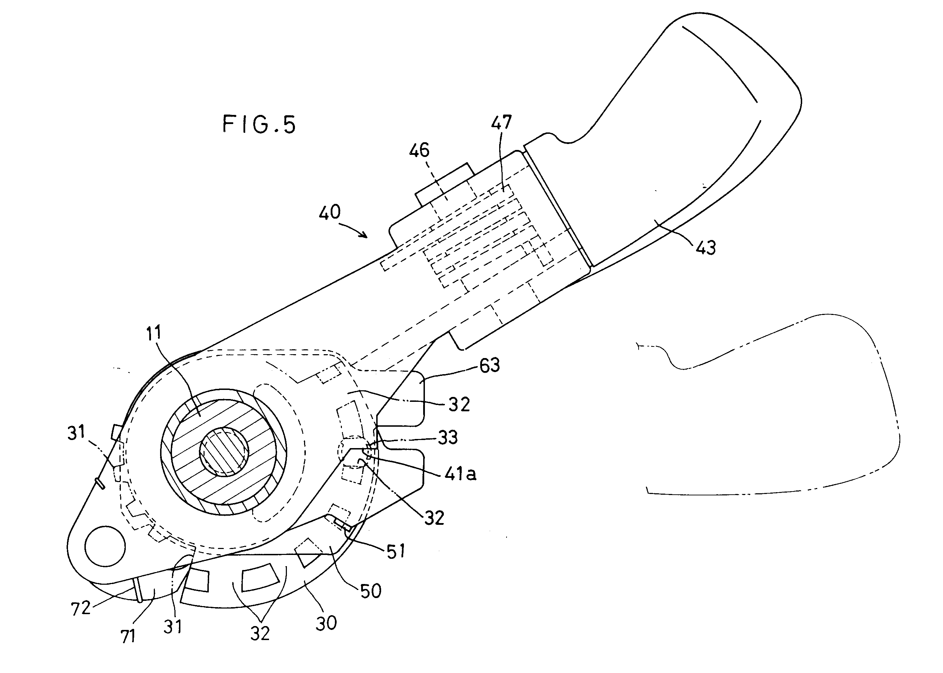

As shown in Figs. 2 and 5, a position setting mechanism S is provided for setting a home position of the control lever element 41, in which mechanism a plate-type position setting element 50 having an upwardly projecting setting portion 51 is unrotatably fitted on the first shaft 11, such that a contact portion 41a of the control lever element 41 urged by the lever spring 18 comes into contact with the setting portion 51 to be stopped at this home position. Incidentally, this setting portion 51 of the position setting member 51 is formed by bending a part of the position setting member 50.

As shown in Figs. 1 through 5, a oneway mechanism W is provided between the the positioning member 30 pivotable together with the winding member 20 and the control lever element 41 so as to permit pivotal motion of the winding member 20 only in the winding direction. More particularly, this oneway mechanism W pivotably supports, at one end of the control lever element 41, a claw-shaped transmitting element 71 and includes a claw spring 72 disposed between the transmitting element 71 and the control lever element 41 and adapted for unidirectionally urging the transmitting element 71 and further includes a plurality of peripherally dispersed transmitted portions 31 formed at a portion of the outer periphery of the positioning member 30 and adapted for transmitting a control force from the control lever element 41 as coming into engagement with the transmitting element 71 only with a return operation of the control lever element 41.

Further, as shown in Figs. 1 and 2, there is provided a position maintaining mechanism P. This mechanism P includes concave portions 32 formed of a plurality of projections peripherally dispersed with a predetermined interdistance therebetween on the upside face of the positioning member 30 and a ball-shaped engaging member 33 for selective engagement with one of the concave portions 32, with the engaging member 33 being urged downwardly by means of a plate spring 60. The number of the concave portions 32 corresponds to the number of speed steps provided by the change-speed lever apparatus of the invention. The engaging ball member 33 has its movement regulated as being received into a through hole 52 defined in the position setting element 50, such that the engaging ball member 33 fixedly maintains the position of the winding member 20 as coming into engagement with one of the concave portions 32. The plate spring 60 includes a semi-spherical pressing portion 61 for receiving a part of the engaging ball member 33, with the ball member 33 being urged along the axis of the first shaft 11 by a bending arrangement of the plate spring 60 in the axial direction of the shaft 11. Also, the pressing plate spring 60 defines a peripherally elongated slot 62 adapted for allowing the deformation of this plate spring and formed at an intermediate postion between the engaging hole and the pressing portion 61.

For releasing the position-maintaining condition of the winding member 20 by the above-described position-maintaining mechanism P, there is provided a release mechanism R. This release mechanism R includes a release portion 48 formed at the leading end of the release lever element 42 and an abutment portion 63 formed by a part of the plate spring 60 projected in opposition to the release portion 48. This release portion 48, with a depressing operation on the release lever element 42, pushes up the abutment portion 63 to cause the plate spring 60 to elastically deform in the axial direction, thereby to weaken the pressing force on the engaging ball member 33 and consequently to permit a movement of this member 33 away from the concave portion 32. Further, the plate spring 60 includes a release cam 64 projected in opposition to the abutment portion 63 and for releasing the engagement between the transmitting element 71 and the transmitted element 31 when the control lever element 41 has returned to its home position.

As shown in Figs. 1 and 4, a limiting mechanism L is provided for limiting the pivotal amount in the rewinding direction of the winding member 20 with a release operation of the release mechanism R to one pitch of the concave portions 32. This limiting mechanism L includes a plurality of stopper portions 34 projecting from the lower face of the positioning member 30 towards the outside in the direction of thickness of the same and stopper pieces 49 provided at the leading end of the release lever element 42 and extending downwardly relative to the stopper portions 34. These stopper pieces 49 are provided so as to correspond to the respective gaps between adjacent pairs of the concave portions 32. With a depressing operation on the release lever element 42, the stopper pieces 49 move in between adjacent pairs of stopper portions 34 to stop one of the same 34, thereby to limit the unwinding-direction-wise pivotal amount of the winding member 20 not to exceed one pitch of the concave portions 32.

Next, operations of the above-described construction will be specifically described.

Fig. 2 shows a highest speed condition, in which the control lever element 41 is urged by the lever spring 18 so that the contact portion 41a of this control lever element 41 is placed in contact with the setting portion 51 of the position setting member 50 whereby the entire control lever 40 is stopped at its home position.

First, from the above highest speed condition shown in Fig. 2, a speed reducing operation is carried out as follows.

When a thumb of the rider's hand holding the handle grip operates the control portion 43 of the control lever 40 to pivot the same counterclockwise in Fig. 2, as illustrated in Fig. 5, the transmitting element 71 comes into engagement with one of the transmitted elements 31 of the positioning member 30, thereby to transmit the forward control force from the control lever 40 to the winding member 20 via the positioning element 30. Then, as this winding member 20 is pivoted in the winding direction, the change-speed cable is pulled. In this operation, one step speed reduction is realized when the amount of the forward pivotal motion of the control lever 40 has reached one stroke amount corresponding to one pitch of the concave portions 32, and two step speed reduction is realized when said amount has reached two stroke amount of the same. In this way, a change-speed operation up to three steps is possible stepwise or overridingly with a single thumb-using operation. For a change-speed operation over four steps, the control lever 40 is temporarily returned to its home position, then, the operation is possible stepwise or overridingly by again operating the lever 40 in the forward direction.

When the above operation is completed at the desired lower speed position, the engaging ball member 33 is engaged with the desired concave portion 32 as illustrated in Fig. 5 so as to prevent return pivotal movement of the winding member 20, whereby this low speed position may be maintained reliably. Further, when the engaging member 33 comes into engagement with the concave portion 32, the plate spring 60 elastically resiles to sharply decrease the load acting on the control lever element 41, and this sharp drop in the load provides a clicking feel to the rider's hand operating the lever element 41 for each change-speed operation. Accordingly, the rider may conveniently keep aware of his change-speed operation through the clicking feel.

After completion of the above-described change-speed operation, if the control portion 43 is released from the pressing force, the control lever element 41 pivotably returns (clockwise in Fig. 2) by the urging force of the lever spring 18, and as the contact portion 41a of the setting portion 51 come into contact with each other, the control lever 40 is returned and stopped at its home position ready for a next change-speed operation, as illustrated in Fig. 2.

As described above, if the lever apparatus is adapted for providing 5 to 6 speed steps, a change-speed operation from a high speed position to a low speed position is readily possible with the two step horizontal operations on the control lever 40 by using the rider's thumb.

Second, a change-speed operation from a low speed position illustrated in Fig. 5 to a high speed position will be particularly described.

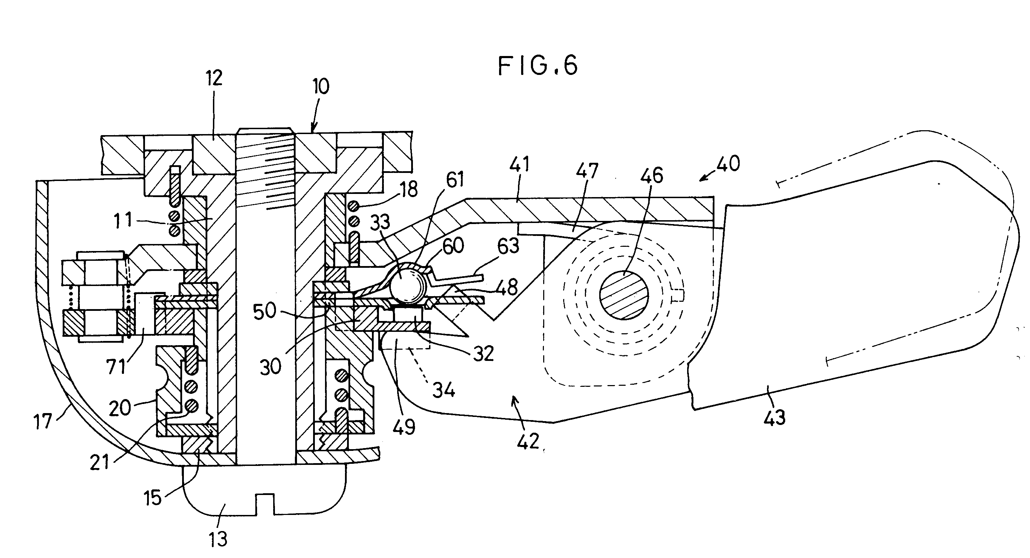

As illustrated in Fig. 6, with a downward pressing operation on the control portion 43 of the control lever 40 which is currently placed at its home position, the release portion 48 of the release lever element 42 pushes up the abutment portion 63 of the plate spring 60. With this release operation, the plate spring 60 elastically deforms along the first shaft 11 thereby to release the urging force applied on the engaging ball member 33. Then, the winding member 20, which has had its position released in the above manner, pivotably returns in the rewinding direction by the urging force of the rewinding spring 21. In this operation, as the engaging piece 49 of the release lever element 42 stops one engaging portion 34 of the positioning member 30, the pivotal amount of the return motion of the winding member 20 by the rewinding spring 21 is effectively limited so as not to exceed one pitch amount of the concave portions 32.

When the downward pressing on the control portion 43 is ceased, the release lever element 42 pivotably returns by the urging force of the release lever spring 47, thereby to release the engagement between the engaging piece 49 and the engaging portion 34. Simultaneously therewith, the plate spring 60 elastically resiles to urge the engaging ball member 33 towards the concave portion 32, and the winding member 20 and the positioning member 30 effect a further reverse pivotal movement by a small amount by the force of the rewinding spring 21, whereby the engaging ball member 33 comes into engagement with the concave portion 32 of one lower step position. As this engagement prevents a further reverse pivotal motion of the winding member 20 by the unwinding spring 21, this one-step-higher speed position may be reliably maintained. Further, in this case also, when the engaging member 33 comes into engagement with the concave portion 32, the pressing spring 60 elastically resiles to sharply decrease the load acting on the control lever element 41, and this sharp drop in the load provides a clicking feel to the rider's hand operating the lever element 41 for each change-speed operation.

As illustrated in Fig. 2, the returned release lever element 42 is stopped at its home position for a next change-speed operation, as contacting the control lever element 41. Then, if this release lever element 42 currently stopped at the home position is again pressed downwardly, in the same manner as described above, the engagement between the engaging ball member 33 and the concave portion 32 is released, and the winding member 20 pivotably returns by the force of the unwinding spring 21, thereby to again release the change-speed cable for a further change-speed operation into one-step-higher speed position.

### (Alternate Embodiments)

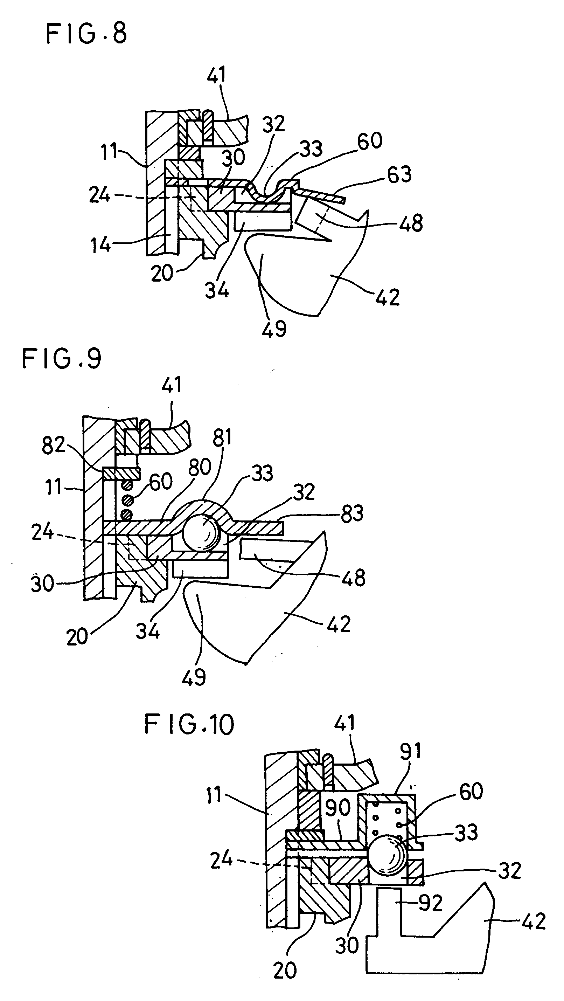

Some alternate embodiments of the present invention will be specifically described next.
(I) In the previous embodiment, the concave portion 32 and the engaging member 33 of the position maintaining mechanism P are opposed to each other in the axial direction of the first shaft 11. Instead, the same may be opposed to each other in the radial direction of this first shaft 11.
(II) It is conceivable to fixedly secure the positioning member 30 to the fixed member 10 while arranging the engaging member 33 so as to pivotable in unison with a pivotal motion of the winding member 20.
(III) Of the positioning member 30 and the engaging member 33, it is conceivable to form fixing portions of the same integrally with the fixed member 10 while forming pivotal portions of the same integrally with the winding member 20.
(IV) In place of the rolling element such as the ball type engaging member 33 employed in the previous embodiment, this engaging member 33 may be formed e.g. by effectively utilizing the pressing spring 60 as illustrated in Fig. 8. That is, in this arrangement, the pressing portion 61 of the pressing spring 60 is provided with a bulging part projecting towards the concave portions 32 and this bulging part acts as the engaging member 33.
(V) In the previous embodiment, the spring for pressing the engaging member 33 is formed of a plate type spring. Instead, as illustrated in Fig. 9, the same may be formed of a coil type spring 60. In this case, the engaging member 33 is supported to a semi-spherical holding portion 81 of a disc type holding meber 80, and the coil spring 60 is disposed between the holding member 80 and a spring receiver 82 of the first shaft 11, such that the coil spring 60 may be elastically deformed with a movement of the holding member 80 in the axial direction of the first shaft 11 by an operation on the release lever element 42.
   Further, in this arrangement of Fig. 9, for example, an abutment portion 83 is provided in the outer periphery of the holding member 80 while the release lever element 42 is provided with a fork-shaped release portion 48 contactable with the abutment portion 83.
(VI) If the coil type spring 60 is employed as the spring for pressing the engaging member 33, as illustrated in Fig. 10, the first shaft 11 supports a holding member 90 having a bottom-equipped holding portion 91 for receiving the engaging member 33, with the holding portion 91 holding the engaging member 33 and the coil spring 60, and the engaging portion 32 is formed of a through hole. Whereas, the release lever element 42 includes, in place of the release portion 48 and the stopper piece 49, a plurality of projecting release stopper pieces 92 insertable into the respective engaging portions 32. Thus, with a forward operation on the release lever element 42, the release stopper pieces 92 are inserted into the respective engaging portions 32, such that one of these control portions releases the engagement between the engaging member 33 and the engaging portion 32 and then the winding member 20 is returned by the urging force of the unwinding spring 21.
(VII) In the previous embodiment, the release mechanism R and the limiting mechanism L include the release lever element 42. Instead, it is also conceivable to eliminate this release lever element 42 and to provide the first shaft hole 44 of the control lever element 41 with a play for the first shaft 11, such that the hole 44 may incline toward the axial (i.e. vertical) direction of the shaft 11.
(X) In the previous embodiment, in a change-speed operation from a low speed position to a higher speed position, the engaging piece 49 of the release lever element 42 comes into engagement, for each each of the concave portions 32, with the stopper portion 34 so as to limit the amount of return motion of the winding member 20, whereby the release lever element 42 must be operated in the forward direction by a plurality of steps which number corresponds to the number of steps of the change-speed operation. Instead, it is also conceivable to eliminate the engaging portion 34 of the limiting mechanism L and to control the degree of engagement between the engaging member 33 and the concave portion 32 by varying the amount of operation on the release lever element 42, such that the winding member 20 may be pivoted stepwise or through a plurality of steps at one time, for the change-speed operation.
(VIII) The setting portion 51 for the setting the home position of the control lever element 41 may be formed integrally with the fixed member 10.
(IX) The base 12 may be directly fixed to the steering handle bar 2 though a band element or without the same.
(X) The change-speed lever apparatus of the present invention may be used also with a front derailleur, instead of the use with the rear derailleur.
(XI) The oneway mechanism W employed in the previous embodidment includes the claw-shaped transmitting element 71 and the transmitted portion 31 defined in the outer peripheral face of the positioning member 30.
(XII) In the previous embodiment, the control lever element 41 shares the same pivot shaft 11 with the winding member 20. Instead, the the pivot shaft 11 of the former may be provided independently of that of the latter.
(XIII) The attaching orientation of the first shaft 11 is not limited to the vertical direction disclosed in the previous embodiment. This shaft 11 may be attached with any orientation most convenient for the rider's thumb or some other finger to operate the control lever 40 when his hand grips the grip portion 3. For instance, the easy operation is also possible by disposing the first shaft 11 parallel with the axial direction of the steering handle bar 2 while disposing the second shaft 46 along the travelling direction of the bicycle.
(XIV) The extending position of the control lever 40 may vary depending on the extending direction of the grip portion 3. For instance, if the lontitudinal axis of the grip portion 3 of the handle bar 2 is aligned with the travelling direction of the bicycle, the interdigital pads of the rider's hand gripping the grip portion 3 are positioned on the outerside face of the grip portion 3 along the outerside of the bicycle body. Thus, in this case, the control lever 40 may extend on the innerside face of the grip portion 3 facing the rider.

## Claims

1. A change-speed lever apparatus for use in a bicycle, said apparatus having:
a fixed member (10);
a winding member (20) pivotably supported to said fixed member (10) and urged toward a cable-unwinding direction, said winding member (20) winding a change-speed cable;
a control lever (40) operable to pivot said winding member (20) only in the cable-winding direction via a oneway mechanism (W) with a rotation thereof about a first axis in said cable-winding direction against the urging force and operable also to return by return-urging means (18);
a position-maintaining mechanism (P) having an engaging member (33) and a plurality of engaging portions (32) operable to stepwisely engage with said engaging member (33), said mechanism (P) maintaining a position of the winding member (20); and
a release mechanism (R) for releasing said position-maintaining condition of said winding member (20) by said position-maintaining mechanism (P) by releasing said engagement between said engaging member (33) and the one engaging portion (32) and for effecting a change-speed operation by causing said winding member (20) to pivot in the cable-unwinding direction with the cable-unwinding urging force,
**characterized in** that
said release mechanism (R) is activated by operating said control lever (40) in a second plane different from a first plane defined by a displacement of said control lever about said first axis.

2. A bicycle change-speed lever apparatus as defined in claim 1, characterized in that said second plane is substantially normal to said first plane.

3. A bicycle change-speed lever apparatus as defined in claim 1 characterized in that said engaging portions (32) engage with said engaging member (33) elastically.

4. A bicycle change-speed lever apparatus as defined in Claim 3,
characterized in that
said control lever (40) acts also as a release lever (42).

5. A bicycle change-speed lever apparatus as defined in Claim 4,
characterized in that
said control lever (40) pivots about a first shaft 11 relative to said fixed member (10) while acting as said release lever (42) pivots about a second shaft (46) disposed substantially normal to said first shaft (11).

6. A bicycle change-speed lever apparatus as defined in Claim 5,
characterized in that
said second shaft (46) is disposed at an intermediate position on said control lever (40).

7. A bicycle change-speed lever apparatus as defined in Claim 6,
characterized in that
said position-maintaining mechanism (P) further includes a positioning member (30), said engaging portion (32) being formed of a plurality of concave portions formed in said positioning member (30), said enagaing member (33) having a convex semi-spherical face contacting said engaging portion (32).

8. A bicycle change-speed lever apparatus as defined in Claim 7,
characterized in that
said positioning member (30) rotates in unison with said winding member (20).

9. A bicycle change-speed lever apparatus as defined in Claim 8,
characterized in that
said stopper portions (34) are formed in said positioning member (30).

10. A bicycle change-speed lever apparatus as defined in Claim 9,
characterized in that
said stopper portions (34) are formed of a plurality of projections.

11. A bicycle change-speed lever apparatus as defined in Claim 10,
characterized in that
said engaging portion (32) and said stopper portions (34) are provided in an upper face and a lower face of said positioning member (30), respectively.

12. A bicycle change-speed lever apparatus as defined in Claim 11,
characterized in that
said engaging member (33) comprises a spherical member.

13. A bicycle change-speed lever apparatus as defined in Claim 12,
characterized in that
said urging means (60) comprises a plate spring.

14. A bicycle change-speed lever apparatus as defined in Claim 12,
characterized in that
said urging means (60) comprises a coil spring.

15. A bicycle change-speed lever apparatus as defined in Claim 11,
characterized in that
said urging means (60) comprises a plate spring and said engaging member (33) is formed of a partial projection of said plate spring.

## Patentansprüche

1. Gangschaltungs-Betätigungshebel zur Verwendung bei Fahrrädern, welcher folgendes aufweist:
ein feststehendes Element (10);
ein drehbar auf dem feststehenden Element (10) gelagertes und in Seilabwickelrichtung gespanntes Aufwickelteil (20), welches ein Gangschaltseil aufwickelt;
einen Betätigungshebel (40), der so betätigbar ist, daß er das Aufwickelteil (20) über eine einseitig wirksame Mechanik (W) unter dessen Drehung um eine erste Achse in Seilaufwickelrichtung entgegen einer Spannkraft nur in Seilaufwickelrichtung dreht, und der auch so betätigbar ist, daß er durch eine Rückspanneinrichtung (18) zurückführbar ist;
eine Positionshaltemechanik (P) mit einem Eingriffselement (33) und einer Vielzahl von Eingriffsabschnitten (32), die so betätigbar sind, daß sie schrittweise mit dem Eingriffselement (33) in Eingriff gelangen, wobei die Mechanik (P) das Aufwickelteil (20) in seiner Stellung hält; und
eine Lösemechanik (R) zum Lösen des Positionshaltezustandes, in welchem die Positionshaltemechanik (P) das Aufwickelteil (20) hält, indem der Eingriff zwischen dem Eingriffselement (33) und dem einen Eingriffsabschnitt (32) gelöst wird, und zur Vornahme einer Gangumschaltung, indem das Aufwickelteil (20) zur Drehung in Seilabwickelrichtung mit der Seilabwickel-Spannkraft veranlaßt wird,
dadurch **gekennzeichnet,**
daß die Lösemechanik (R) durch Betätigung des Betätigungshebels (40) in einer zweiten Ebene ausgelöst wird, die von einer durch Verlagerung des Betätigungshebels um die erste Achse definierten ersten Ebene verschieden ist.

2. Gangschaltungs-Betätigungshebel für Fahrräder nach Anspruch 1, dadurch **gekennzeichnet**, daß die zweite Ebene im wesentlichen senkrecht zur ersten Ebene steht.

3. Gangschaltungs-Betätigungshebel für Fahrräder nach Anspruch 1, dadurch **gekennzeichnet**, daß die Eingriffsabschnitte (32) mit dem Eingriffselement (33) elastisch in Eingriff stehen.

4. Gangschaltungs-Betätigungshebel für Fahrräder nach Anspruch 3, dadurch **gekennzeichnet**, daß der Betätigungshebel (40) auch als Lösehebel (42) fungiert.

5. Gangschaltungs-Betätigungshebel für Fahrräder nach Anspruch 4, dadurch **gekennzeichnet**, daß der Betätigungshebel (40) um eine erste Welle (11) relativ zum feststehenden Element (10) drehbar ist, während er in seiner Funktion als Lösehebel (42) um eine zweite Welle (46) drehbar ist, die im wesentlichen senkrecht zur ersten Welle (11) steht.

6. Gangschaltungs-Betätigungshebel für Fahrräder nach Anspruch 5, dadurch **gekennzeichnet**, daß die zweite Welle (46) auf dem Betätigungshebel (40) in einer mittleren Position angeordnet ist.

7. Gangschaltungs-Betätigungshebel für Fahrräder nach Anspruch 6, dadurch **gekennzeichnet**, daß die Positionshaltemechanik (P) außerdem ein Positionierelement (30) aufweist, wobei der Eingriffsabschnitt (32) aus einer Vielzahl konkaver Abschnitte gebildet ist, die in dem Positionierelement (30) ausgebildet sind, und wobei das Eingriffselement (33) eine konvexe halbkugelförmige Fläche aufweist, die mit dem Eingriffsabschnitt (32) in Berührung steht.

8. Gangschaltungs-Betätigungshebel für Fahrräder nach Anspruch 7, dadurch **gekennzeichnet**, daß sich das Positionierelement (30) im Einklang mit dem Aufwickelteil dreht.

9. Gangschaltungs-Betätigungshebel für Fahrräder nach Anspruch 8, dadurch **gekennzeichnet**, daß in dem Positionierelement (30) Anschlagbereiche (34) ausgebildet sind.

10. Gangschaltungs-Betätigungshebel für Fahrräder nach Anspruch 9, dadurch **gekennzeichnet**, daß die Anschlagbereiche (34) aus einer Vielzahl von Vorsprüngen bestehen.

11. Gangschaltungs-Betätigungshebel für Fahrräder nach Anspruch 10, dadurch **gekennzeichnet**, daß der Eingriffsabschnitt (32) und die Anschlagbereiche (34) jeweils in einer Oberseite bzw. einer Unterseite des Positionierelements (30) vorgesehen sind.

12. Gangschaltungs-Betätigungshebel für Fahrräder nach Anspruch 11, dadurch **gekennzeichnet**, daß das Eingriffselement (33) ein kugelförmiges Element aufweist.

13. Gangschaltungs-Betätigungshebel für Fahrräder nach Anspruch 12, dadurch **gekennzeichnet**, daß die Spanneinrichtung (60) eine Blattfeder aufweist.

14. Gangschaltungs-Betätigungshebel für Fahrräder nach Anspruch 12, dadurch **gekennzeichnet**, daß die Spanneinrichtung eine Wickelfeder aufweist.

15. Gangschaltungs-Betätigungshebel für Fahrräder nach Anspruch 11, dadurch **gekennzeichnet**, daß die Spanneinrichtung (60) eine Blattfeder aufweist und daß das Eingriffselement (33) von einem Teilvorsprung der Blattfeder gebildet wird.

## Revendications

1. Levier de changement de vitesse pour bicyclette, ledit levier comprenant :
- un élément fixe (10) ;
- un élément d'enroulement (20) supporté en pivotement sur ledit élément fixe (10) et sollicité dans une direction de déroulement d'un câble, ledit élément d'enroulement (20) enroulant un câble de changement de vitesse ;
- un levier de commande (40) capable de faire pivoter ledit élément d'enroulement (20) uniquement dans la direction d'enroulement du câble au moyen d'un mécanisme monodirectionnel (W) par une rotation de ce dernier autour d'un premier axe dans ladite direction d'enroulement du câble en opposition à la force de sollicitation et également capable de revenir sous l'effet d'un moyen de sollicitation de retour (18) ;
- un mécanisme de maintien de position (P) présentant un élément de prise (33) et une pluralité de parties de prise (32) capables de venir en prise, par échelon, avec ledit élément de prise (33), ledit mécanisme (P) maintenant une position de l'élément d'enroulement (20) ; et
- un mécanisme de dégagement (R) pour supprimer ledit état de maintien de la position dudit élément d'enroulement (20) par ledit mécanisme (P) de maintien de position en dégageant la prise entre ledit élément de prise (33) et une partie de prise (32) et pour effectuer une opération de changement de vitesse en sollicitant ledit élément d'enroulement (20) pour le faire pivoter dans la direction de déroulement du câble sous l'effet de la force de sollicitation du déroulement du câble, caractérisé en ce que ledit mécanisme de dégagement (R) est déclenché par la manoeuvre dudit levier de commande (40) dans un second plan différent du premier plan, défini par un déplacement dudit levier de commande autour dudit premier axe.

2. Levier de changement de vitesse pour bicyclette selon la revendication 1, caractérisé en ce que ledit second plan est sensiblement perpendiculaire audit premier plan.

3. Levier de changement de vitesse pour bicyclette selon la revendication 1, caractérisé en ce que lesdites parties de prise (32) viennent en prise élastique avec le dit élément de prise (33).

4. Levier de changement de vitesse pour bicyclette selon la revendication 3, caractérisé en ce que ledit levier de commande (40) agit également comme levier de dégagement (42).

5. Levier de changement de vitesse pour bicyclette selon la revendication 4, caractérisé en ce que ledit levier de commande (40) pivote autour d'un premier arbre (11) par rapport audit élément fixé (10) tout en servant de levier de dégagement (42) en pivotant autour d'un second arbre (46) orienté sensiblement perpendiculairement audit premier arbre (11).

6. Levier de changement de vitesse pour bicyclette selon la revendication 5, caractérisé en ce que ledit second arbre (46) est placé en une position intermédiaire sur ledit levier de commande (40).

7. Levier de changement de vitesse pour bicyclette selon la revendication 6, caractérisé en ce que ledit mécanisme (P) de maintien de position comprend en outre un élément de positionnement (30), ladite partie de prise (32) étant constituée par une pluralité de parties concaves usinées dans ledit élément de positionnement (30), ledit élément de prise (33) ayant une face convexe hémisphérique venant en contact avec ladite partie de prise (32).

8. Levier de changement de vitesse pour bicyclette selon la revendication 7, caractérisé en ce que ledit élément de positionnement (30) est entraîné en rotation à l'unisson avec ledit élément d'enroulement (20).

9. Levier de changement de vitesse pour bicyclette selon la revendication 8, caractérisé en ce que des parties de butée (34) sont formées dans ledit élément de positionnement (30).

10. Levier de changement de vitesse pour bicyclette selon la revendication 9, caractérisé en ce que lesdites parties de butée (34) sont constituées par une pluralité de saillies.

11. Levier de changement de vitesse pour bicyclette selon la revendication 10, caractérisé en ce que ladite partie de prise (32) et lesdites parties de butée (34) sont usinées dans une face supérieure et une face inférieure dudit élément de positionnement (30), respectivement.

12. Levier de changement de vitesse pour bicyclette selon la revendication 11, caractérisé en ce que ledit élément de prise (33) est constitué par un élément sphérique.

13. Levier de changement de vitesse pour bicyclette selon la revendication 12, caractérisé en ce que ledit moyen de sollicitation (60) est constitué par un ressort plat.

14. Levier de changement de vitesse pour bicyclette selon la revendication 12, caractérisé en ce que ledit moyen de sollicitation (60) est constitué par un ressort en spirale.

15. Levier de changement de vitesse pour bicyclette selon la revendication 11, caractérisé en ce que ledit moyen de sollicitation (60) est constitué par un ressort plat et ledit élément de prise (33) par un prolongement partiel dudit ressort plat.
